# EUROPÄISCHE PATENTSCHRIFT

(11) **EP 2 755 167 B1**
(45) Veröffentlichungstag und Bekanntmachung des Hinweises auf die Patenterteilung: **04.09.2019**
(21) Anmeldenummer: 13197635.9
(22) Anmeldetag: 17.12.2013
(51) Int. Cl.: G06K 15/02, G06F 3/12, B41J 11/00

(54) **Verfahren zum Regeln der Druckgeschwindigkeit**
Method for controlling printing speed
Procédé de régulation de la vitesse d'impression

(30) Priorität: 14.01.2013 DE 102013000503
(43) Veröffentlichungstag der Anmeldung: 16.07.2014
(73) Patentinhaber: Heidelberger Druckmaschinen AG, 69115 Heidelberg (DE)
(72) Erfinder: Ratjen, Hans-Jürgen, 24576 Bad Bramstedt (DE)

(56) Entgegenhaltungen:
- EP-A2- 1 170 693
- WO-A1-96/22573
- WO-A1-2009/014632
- DE-A1-102005 054 440
- JP-A- H05 193 191

## Beschreibung

Gegenstand der vorliegenden Erfindung ist ein Verfahren zum Regeln der Druckgeschwindigkeit beim Drucken von wenigstens zwei aufeinander folgenden Druckaufträgen mit jeweils wenigstens zwei voneinander verschiedenen Druckbildern auf Bedruckstoff mit den Merkmalen des Anspruchs 1.

Beim industriellen Drucken mit digitalen Drucksystemen, wie z.B. mit Tintenstrahl-Druckern, ist es bekanntlich problemlos möglich, das Druckbild aufeinander folgender Druckaufträge zu wechseln. Dieser Wechsel kann sogar so schnell erfolgen, dass jedes einzelne Druckbild nur ein einziges Mal gedruckt wird (Druckaufträge mit nur einem Druck). Probleme entstehen jedoch in solchen Fällen, in denen der Druckprozess mit hoher Geschwindigkeit erfolgt, die Druckbilder sehr oft wechseln und zugleich erhebliche digitale Daten darstellen, denn die Druckdaten zu den schnell wechselnden Druckbildern müssen während des Druckens errechnet werden. Das Berechnen der Druckdaten kann zudem sehr aufwendig sein, wenn die entsprechenden Bilddaten sehr komplex sind. Je größer somit die zu berechnenden Datenmengen, desto größer werden die Anforderungen an den beteiligten Rechner, d.h. es können dann nur sehr teure Hochleistungs-Workstations eingesetzt werden. Entsprechendes gilt, wenn nicht das komplette Druckbild, sondern nur eine Anteil des Druckbildes wechselt, d.h. wenn das Druckbild statische und variable Anteile aufweist. Ein weiteres Problem besteht darin, dass ein Datenmangel zu einem Stoppen des Druckprozesses führt und dass in diesem Fall der Bedruckstoff, z.B. eine mit Klebe-Etiketten bestückte Folienbahn, vor dem Weiterdrucken zurückgefördert werden und passgenau positioniert muss, um ein nahtloses Weiterdrucken zu gewährleisten. Zudem muss - sofern vorgesehen - ein Trockenprozess, z.B. mittels eines UV-Trockners, ebenfalls unterbrochen und zum richtigen Zeitpunkt wieder gestartet werden.

Ein Beispiel für die anfallenden Datenmengen: Ein Etiketten-Drucksystem mit einer Druckbreite von z. B. 324 mm (entsprechend 3 kaskadierten Druckmodulen des Herstellers Kyocera) bei einer Druckauflösung von 600 dpi und einer Geschwindigkeit von 50 m/min "verbraucht" eine Netto-Datenrate von etwa 200 MB/s bei einer Farbtiefe von 3 Bit und 4 Farben.

Eine Lösung dieses Problems wurde bisher darin gesehen, alle Druckbilder bereits im Voraus zu berechnen und zu speichern. Diese Lösung führt jedoch zu dem Problem, dass entsprechend große Datenspeicher als Pufferspeicher zur Verfügung gestellt werden müssen. Eine andere Lösung wurde darin gesehen, im Voraus rechnerisch abzuschätzen, wie viel Rechenzeit der Rechner benötigen wird und die Druckgeschwindigkeit auf Grundlage dieser Abschätzung einzustellen. Da eine solche Abschätzung jedoch immer fehlerbehaftet ist und der Fehler mit der Komplexität der Bilddaten zunimmt, ist eine zufriedenstellende Abschätzung bei komplexen Bilddaten oft nicht möglich und infolgedessen muss die Druckgeschwindigkeit niedriger als nötig eingestellt werden, um einen möglichen Datenmangel zu verhindern.

Ein ähnliches Problem besteht in einem entfernten Gebiet der Technik: beim sogenannten Brennen von CDs, denn auch dort soll ein Datenmangel beim Brennen und ein Stoppen des Brennvorgangs verhindert werden. Die EP 1 160 787 A2 offenbart ein Verfahren zum Beschreiben optischer Medien, z.B. CD oder DVD, wobei die Schreibgeschwindigkeit dynamisch an die Datenmenge in einem Puffer und an die Veränderung dieser Datenmenge angepasst, vorzugsweise bei drohendem Pufferleerlauf herabgesetzt wird. Es werden allerdings keine variablen Inhalte auf eine Reihe von mehreren optischen Medien geschrieben. Das beschriebene Verfahren betrifft stattdessen nur das Datenmanagement beim Schreiben eines einzelnen Mediums.

Die WO2009014632A1 offenbart: In einem Druckverfahren und -system werden Segmente eines Druckauftrags an die jeweiligen nachgeschalteten Prozessoren verteilt. Die verbleibenden Druckaufträge eines Streams werden gespeichert. Die verteilten Segmente werden verarbeitet, um entsprechende druckbare Rahmen bereitzustellen, die den jeweiligen Druckköpfen zugeführt werden. Die Verarbeitung in verschiedenen Downstream-Prozessoren ist asynchron und abhängig vom Inhalt. Ein Frame-Beendigungssignal wird unmittelbar nach der jeweiligen Verarbeitung von jedem nachgeschalteten Prozessor übertragen. Die druckbaren Rahmen werden auf einem Empfänger gedruckt, um eine gedruckte Ausgabe mit einem oder mehreren Dokumenten bereitzustellen, wobei jedes Dokument entsprechende druckbare Rahmen in der Registrierung hat. Das Sequestrieren eines nächsten Druckauftrags wird im Anschluss an das Senden der Rahmenvervollständigungssignale von allen nachgeschalteten Prozessoren freigegeben und darauf ansprechend.

Die WO9622573A1 offenbart: Ein Verfahren zum Drucken variabler Daten mit einer Seitenbeschreibungssprache, mit dem die Grafikzustände für eine Seite variabler Daten definiert und gespeichert werden können; und wodurch ermöglicht wird, dass die gespeicherten Grafikzustände Elementen variabler Daten aus einer Datenbank zugeordnet werden, so dass die Grafikzustände nach dem Definieren verwendet werden können, um mehrere Seiten variabler Daten zu drucken. Das Verfahren der vorliegenden Erfindung wird mittels einer Steuerungsaufgabe implementiert, die in einem Drucker in Verbindung mit einem Seitenbeschreibungsprogramm ausgeführt wird, um variable Datenbereiche in dem Programm zu identifizieren und die Grafikzustände für die variablen Datenbereiche zu speichern, wie sie vom Programm definiert werden. Nachdem das Programm beendet wurde, ordnet eine Zusammenführungsaufgabe variablen Datenelementen aus einer Datendatei die Grafikzustände zu, generiert eine Bitmap für jeden variablen Datenbereich, führt die Bitmap mit der Seitenvorlage zusammen und gibt die Seite vom Drucker aus. Dementsprechend werden bei dem Verfahren der vorliegenden Erfindung Bitmaps für mehrere Seiten variabler Daten aus einem einzigen Seitenbeschreibungsprogramm erzeugt.

Die EP1170693A2 offenbart: Ein Drucksystem, durch das eine ausreichende Versorgung der Druckmaschine mit ausreichenden Daten sichergestellt wird, so dass die Druckmaschine kontinuierlich und effizient arbeiten kann. Das Drucksystem hat mindestens eine Markierungsmaschine, die ein Bild auf ein Medium drucken kann, während ein Transport die Medien an der Markierungsmaschine vorbeibewegt. Puffer oder Puffersätze enthalten vollständig rasterbildverarbeitete Seiten, und die Schnittstellenlogik überträgt die gepufferten Seiten an die Markierungsmaschine, um das Bild auf das Medium zu übertragen. Die Pufferverwaltungslogik steuert die Puffer so, dass, wenn das Drucksystem die von den nicht-komplexen Rasterbildverarbeitungsseiten übrig gebliebene Zeit ansammelt, die Zeit komplexen Seiten zugeordnet wird, um die durchschnittliche Rasterbildverarbeitungszeit mit der Geschwindigkeit der Druckmaschine zu optimieren.

Die DE102005054440 A1 offenbart: Ein Verfahren, eine Vorrichtung und ein Computerprogramm zur Kopplung eines Druckgeräts mit einem Drucknachverarbeitungsgerät. Ein insbesondere bahnförmiger Aufzeichnungsträger wird von dem Druckgerät bedruckt und nach Verlassen des Druckgeräts einer Speichereinrichtung zur Aufnahme des Aufzeichnungsträgers zugeführt, dort bedarfsweise zwischengespeichert und dann dem Drucknachverarbeitungsgerät zugeführt. Mindestens ein Betriebsparameter des Druckgeräts wird mittels mindestens eines Betriebsparameters der Speichereinrichtung insbesondere regelmäßig und/oder kontinuierlich eingestellt.

Vor diesem Hintergrund ist es eine Aufgabe der vorliegenden Erfindung, ein Verfahren zum Regeln der Druckgeschwindigkeit beim Drucken von wenigstens zwei aufeinander folgenden Druckaufträgen mit jeweils wenigstens zwei voneinander verschiedenen Druckbildern auf Bedruckstoff zu schaffen, welches es erlaubt, die Druckgeschwindigkeit dynamisch an die Leistung eines - insbesondere an der Berechnung und der Übertragung der Druckdaten - beteiligten Systems, z.B. eines Rechners und den notwendigen Schnittstellen, anzupassen.

Diese Aufgabe wird erfindungsgemäß mit einem Verfahren mit den Merkmalen gemäß Anspruch 1 gelöst. Weiterbildungen dieser Lösung sind in den Unteransprüchen aufgeführt und in der folgenden Beschreibung und/oder Zeichnung dargelegt.

Ein erfindungsgemäßes Verfahren zum Regeln der Druckgeschwindigkeit beim Drucken von wenigstens zwei aufeinander folgenden Druckaufträgen mit jeweils wenigstens zwei voneinander verschiedenen Druckbildern auf Bedruckstoff, wobei ein erster Druckauftrag n erste Druckbilder mit jeweils einem ersten statischen Anteil (A) und jeweils einem ersten variablen Anteil (ai mit i=1 bis n, wobei n Element der positiven ganzen Zahlen) umfasst, und ein zweiter Druckauftrag m zweite Druckbilder mit jeweils einem zweiten statischen Anteil (B) und jeweils einem zweiten variablen Anteil (bj mit j=1 bis m, wobei m Element der positiven ganzen Zahlen) umfasst, weist folgende Verfahrensschritte auf:
1) Berechnen der Druckdaten des ersten statischen Anteils (A);
2) Aufeinander folgendes Berechnen der Druckdaten der ersten variablen Anteile (ai), jeweiliges Zusammenführen mit den Druckdaten des ersten statischen Anteils (A) zu ersten Druckdaten (A+ai) und jeweiliges Weiterleiten der ersten Druckdaten an eine Druckeinheit (1), wobei ein Zähler den aktuellen Wert von i mitzählt;
3) Paralleles Berechnen der Druckdaten des zweiten statischen Anteils (B) während des Verfahrensschritts 2);
4) Drucken der ersten Druckbilder unter Verwendung der jeweiligen ersten Druckdaten mit der Druckeinheit und dabei Regeln der Druckgeschwindigkeit der Druckeinheit derart, dass die Berechnung des Verfahrensschritts 3) abgeschlossen ist, bevor der Zähler den Wert n erreicht;
5) Aufeinander folgendes Berechnen der Druckdaten der zweiten variablen Anteile (bj), jeweiliges Zusammenführen mit den Druckdaten des zweiten statischen Anteils (B) zu zweiten Druckdaten (B+bj) und jeweiliges Weiterleiten der zweiten Druckdaten an die Druckeinheit; und
6) Drucken der zweiten Druckbilder unter Verwendung der jeweiligen zweiten Druckdaten mit der Druckeinheit.

Beim Durchführen des erfindungsgemäßen Verfahrens ist in vorteilhafter Weise eine dynamische Anpassung der Druckgeschwindigkeit an die Leistung eines - insbesondere an der Berechnung und der Übertragung der Druckdaten - beteiligten Systems, z.B. eines Rechners und den notwendigen Schnittstellen, möglich. Es entfällt zudem in vorteilhafter Weise die Notwendigkeit, Druckdaten in großer Zahl im Voraus zu berechnen und in einem entsprechend groß zu bemessenden und teuren Speicher bereitzuhalten. Schließlich kann in vorteilhafter weise verhindert werden, dass es beim Drucken von wenigstens zwei aufeinander folgenden Druckaufträgen mit jeweils wenigstens zwei voneinander verschiedenen Druckbildern auf Bedruckstoff zu einem unerwünschten Stoppen des Druckprozesses aufgrund von Datenmangel und somit zu unerwünschten Produktionskosten-Steigerungen kommt. Durch das erfindungsgemäße dynamische Anpassen der Druckgeschwindigkeit sind auch Druckprozesse mit sehr schnell wechselnden statischen Anteilen A und B möglich, d.h. es gibt zu A nur wenige aₙ und zu B nur wenige bₘ (z.B. n und m kleiner als 10).

Eine kostengünstige und daher bevorzugte Weiterbildung des erfindungsgemäßen Verfahrens kann sich dadurch auszeichnen, dass das Berechnen gemäß der Verfahrensschritte 1), 2), 3) und 5) durch denselben Rechner erfolgt.

Eine für einen unterbrechungsfreien Druck vorteilhafte und daher bevorzugte Weiterbildung des erfindungsgemäßen Verfahrens kann sich dadurch auszeichnen, dass die gemäß Verfahrensschritt 1) berechneten Druckdaten in einem ersten Pufferspeicher gespeichert werden und dass die gemäß Verfahrensschritt 3) berechneten Druckdaten in einem zweiten Pufferspeicher gespeichert werden.

Eine weitere, für einen unterbrechungsfreien Druck vorteilhafte und daher bevorzugte Weiterbildung des erfindungsgemäßen Verfahrens kann sich dadurch auszeichnen, dass das Zusammenführen der Druckdaten gemäß Verfahrensschritt 2) oder 5) in einer Zusammenführungseinheit erfolgt, der die zusammenzuführenden Druckdaten von dem jeweiligen ersten oder zweiten Pufferspeicher und dem Rechner zugeführt werden.

Eine für die dynamische Druckgeschwindigkeitsregelung vorteilhafte und daher bevorzugte Weiterbildung des erfindungsgemäßen Verfahrens kann sich dadurch auszeichnen, dass beim Regeln der Druckgeschwindigkeit der Druckeinheit die Rechengeschwindigkeit des Rechners beim parallelen Berechnen der Druckdaten der ersten variablen Anteile (ai) und der Druckdaten des zweiten statischen Anteils (B) berücksichtigt wird.

Durch die Berücksichtigung der Rechengeschwindigkeit, insbesondere einer durchschnittlichen, des Rechners beim parallelen Berechnen lässt sich aus der Kenntnis der Anzahl und ggf. Komplexität der zu berechnenden Daten näherungsweise bestimmen, wie lange der Rechner noch benötigen wird, um alle verbleibenden Druckdaten ab dem aktuellen Zählerstand i der ersten variablen Anteile aᵢ und parallel dazu die Druckdaten des zweiten statischen Anteils B zu berechnen. Die Druckgeschwindigkeit kann dann entsprechend herab geregelt (oder ggf. sogar herauf geregelt) werden, so dass sichergestellt ist, dass nach dem Drucken der letzten ersten Druckdaten A+aₙ bzw. der entsprechenden Druckbilder die Druckdaten des zweiten statischen Anteils B fertig berechnet sind und ohne wesentliche Unterbrechung mit dem Drucken der zweiten Druckdaten B+bⱼ bzw. der entsprechenden Druckbilder begonnen werden kann.

Eine weitere, für die dynamische Druckgeschwindigkeitsregelung vorteilhafte und daher bevorzugte Weiterbildung des erfindungsgemäßen Verfahrens kann sich dadurch auszeichnen, dass beim Regeln der Druckgeschwindigkeit der Druckeinheit die Datenübertragungsgeschwindigkeit der Schnittstellen zwischen dem Rechner, der beiden Pufferspeicher, der Zusammenführungseinheit und der Druckeinheit berücksichtigt wird.

Da die jeweiligen Daten über jeweilige Schnittstellen von dem Rechner über die Pufferspeicher (oder den Zähler) und die Zusammenführungseinheit zur Druckeinheit geleitet werden müssen, ist von Vorteil, die Datenübertragungsgeschwindigkeit dieser Schnittstellen bei der dynamische Druckgeschwindigkeitsregelung berücksichtigen, zumindest in dem Fall, indem die Übertragung der Daten wesentlich länger als deren Berechnung dauert.

Eine für das Drucken variabler Druckbilder vorteilhafte und daher bevorzugte Weiterbildung des erfindungsgemäßen Verfahrens kann sich dadurch auszeichnen, dass das Drucken mittels wenigstens eines Tintenstrahl-Druckkopfes erfolgt.

Eine weitere, für die dynamische Druckgeschwindigkeitsregelung vorteilhafte und daher bevorzugte Weiterbildung des erfindungsgemäßen Verfahrens kann sich dadurch auszeichnen, dass beim Regeln der Druckgeschwindigkeit der Druckeinheit die TransportGeschwindigkeit des Bedruckstoffs, die Frequenz des Tröpfchenausstoßes des Tintenstrahl-Druckkopfes und optional die Strahlungs-Leistung eines dem Tintenstrahl-Druckkopf nachgeordneten Trockners, insbesondere eines UV-Trockners, verändert wird.

Eine weitere, für die dynamische Druckgeschwindigkeitsregelung vorteilhafte und daher bevorzugte Weiterbildung des erfindungsgemäßen Verfahrens kann sich dadurch auszeichnen, dass eine geringe Menge, bevorzugt weniger als 100 und besonders bevorzugt etwa 50 oder sogar nur etwa 10 der zusammengeführten ersten und zweiten Druckdaten in einem Pufferspeicher gepuffert werden. Aus dem Pufferspeicher werden die Druckdaten an die Druckeinheit übergeben. Es werden somit nicht wie im Stand der Technik alle Druckdaten eines Druckauftrages vorausberechnet und gepuffert, sondern nur ein Anteil. Die Größe dieses Anteils wird dabei in vorteilhafter Weise so gewählt, dass das System bestehend aus den beiden mechanischen (und daher der Wirkung der Trägheit unterliegenden) Komponenten Druckeinheit und Bedruckstoff-Transport eine Anpassung der Druck-Geschwindigkeit und der Transportgeschwindigkeit ohne dadurch hervorgerufenen Datenmangel oder Datenüberschuss erlaubt. Das zusätzliche Zwischen-Puffern der Druckdaten soll demnach nur kurzzeitige störende Einflüsse der trägen, mechanischen Komponenten auf den Ablauf eines Druckauftrages und die Bereitstellung der dazu benötigen Druckdaten verhindern.

Die Erfindung als solche sowie vorteilhafte Weiterbildungen der Erfindung werden nachfolgend unter Bezug auf die zugehörige Zeichnung anhand eines bevorzugten Ausführungsbeispiels näher beschrieben.

Die Figuren zeigen:

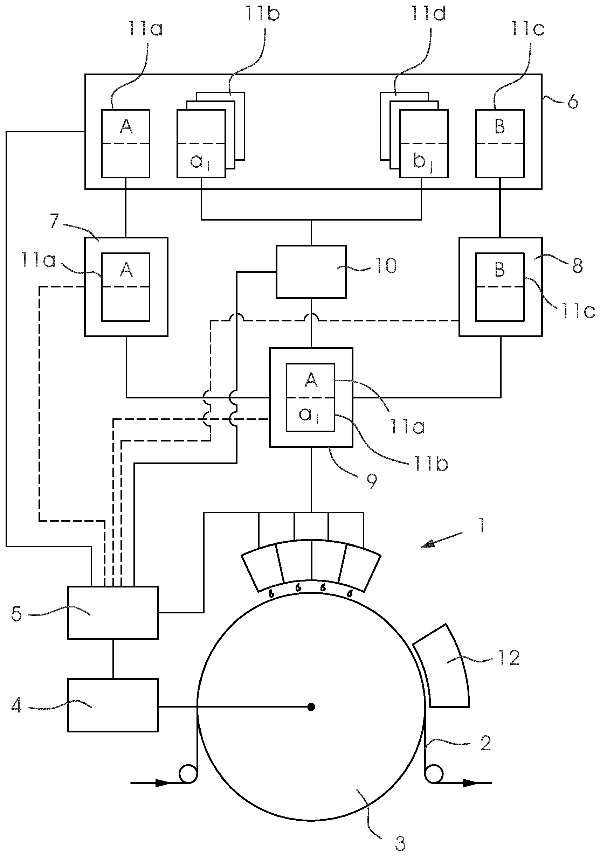

- Figur 1: eine schematische Darstellung eines bevorzugten Ausführungsbeispiels des erfindungsgemäßen Verfahrens anhand der beteiligten Komponenten, deren Verbindungen und Zusammenwirken.

Figur 1 zeigt als Druckeinheit 1 einen Tintenstrahl-Drucker für den Vierfarbdruck, d.h. vier in der Transportrichtung des Bedruckstoffs 2 aufeinander folgend angeordnete und quer dazu ausgerichtete Druckköpfe. Der Bedruckstoff, z.B. eine Träger-Folienbahn mit Klebe-Etiketten-Bestückung, wird auf der Umfangsoberfläche eines Transportzylinders 3 entlang der Druckköpfe geführt. Der Transportzylinder weist einen Antrieb 4 auf, welcher wiederum mit einer Regelung 5 verbunden ist. Auch zwischen den Druckköpfen der Druckeinheit und der Regelung besteht eine Verbindung. Diese und auch allen nachfolgend beschriebenen digitalen Verbindungen dienen dem digitalen Datentransport und werden nachfolgend als Schnittstellen bezeichnet. Die Druckköpfe erhalten somit über ihre Schnittstellen die für das Drucken der Druckbilder der Druckaufträge benötigten Druckdaten. Die Schnittstellen können als so genannte PCI-Express-Schnittstellen ausgeführt sein.

Weiterhin zeigt Figur 1 einen digitalen Rechner 6 (z.B. eine sogenannte Workstation), einen ersten und einen zweiten, bevorzugt identischen, digitalen Pufferspeicher 7 und 8 (z.B. sogenannte Pagebuffer, die z.B. zusammen mit der Druckeinheit 1 in einem Drucker vorgesehen sein können), eine digitale Zusammenführungseinheit 9 (z.B. einen sogenannten Merger, der ebenfalls im Drucker vorgesehen sein kann) und einen digitalen Zähler 10, deren Zusammenwirken bei der Durchführung des erfindungsgemäßen Verfahrens nachfolgend beschrieben wird.

Folgende Bezeichnungen werden nachfolgend verwendet: Ein erster Druckauftrag umfasst n erste Druckbilder mit jeweils einem ersten statischen Anteil (A) und jeweils einem ersten variablen Anteil (aᵢ mit i=1 bis n, wobei n Element der positiven ganzen Zahlen) umfasst. Ein zweiter Druckauftrag umfasst m zweite Druckbilder mit jeweils einem zweiten statischen Anteil (B) und jeweils einem zweiten variablen Anteil (bⱼ mit j=1 bis m, wobei m Element der positiven ganzen Zahlen). Die statischen Anteile A und B können z.B. Hintergrundbilder sein, in die die jeweiligen variablen Anteile eingedruckt werden.

Das nachfolgend beschriebene Verfahren kann insbesondere beim Bedrucken von zweidimensionalen Bedruckstoffen wie z.B. Bogen oder Bahnen aus Papier, Karton oder (Träger-) Folie und auch beim Bedrucken von dreidimensionalen Bedruckstoffen wie z.B. Flaschen, Dosen oder Kartonverpackungen eingesetzt werden.

Im Rechner 6 findet das Berechnen der Druckdaten 11a des ersten statischen Anteils A statt. Dieser statische Anteil stellt einen festen, d.h. unveränderlichen Anteil des Druckbildes für den ersten Druckauftrag dar und kann sich z.B. wie gezeigt in einem oberen Abschnitt des Druckbilds befinden.

Nach Abschluss der Berechnung der Druckdaten des ersten statischen Anteils A werden die zugehörigen Druckdaten über eine Schnittstelle vom Rechner 6 an den ersten Pufferspeicher 7 gesendet. Dieser Pufferspeicher steht über eine Schnittstelle mit der Zusammenführungseinheit 9 in Verbindung, so dass der erste statische Anteil A der Zusammenführungseinheit zur Verfügung steht.

Ebenfalls nach Abschluss der Berechnung der Druckdaten des ersten statischen Anteils A erfolgt im Rechner 6 das aufeinander folgende Berechnen der Druckdaten der ersten variablen Anteile aᵢ. Diese variablen Anteile stellen einen nicht festen, d.h. veränderlichen Anteil des Druckbildes für den ersten Druckauftrag dar und können sich jeweils z.B. wie gezeigt in einem unteren Abschnitt des Druckbilds befinden. Jedes Druckbild des ersten Druckauftrages weist somit einen statischen Anteil A und einen der variablen Anteile aᵢ auf.

Nach Abschluss der Berechnung der Druckdaten eines jeden ersten variablen Anteils aᵢ werden die zugehörigen Druckdaten dieses variablen Anteils aᵢ über eine Schnittstelle vom Rechner 6 an die Zusammenführungseinheit 9 gesendet, wobei der Zähler 10 den aktuellen Wert von i mitzählt. In der Zusammenführungseinheit erfolgt dann ein jeweiliges Zusammenführen der Druckdaten der ersten variablen Anteils aᵢ mit den Druckdaten des ersten statischen Anteils A zu ersten Druckdaten A+aᵢ. Insgesamt entsteht auf diese Weise die Reihe der ersten Druckdaten A+aᵢ, ..., A+aᵢ, ..., A+aₙ. Die einzelnen ersten Druckdaten A+aᵢ werden jeweils über eine Schnittstelle an die Druckeinheit 1 weitergeleitet. Erst wenn erste Druckdaten A+aᵢ an die Druckeinheit weitergeleitet sind, werden die darauf folgenden Druckdaten A+aᵢ₊₁ zusammengeführt. Das Zusammenführen erfolgt somit in Abhängigkeit der Druckgeschwindigkeit.

Ebenfalls nach Abschluss der Berechnung der Druckdaten des ersten statischen Anteils A erfolgt im Rechner 6 ein paralleles Berechnen der Druckdaten des zweiten statischen Anteils B. "Parallel" meint hierbei, dass die Berechnung der Druckdaten der ersten variablen Anteile aᵢ und die Berechnung der Druckdaten des zweiten statischen Anteils B im Wesentlichen gleichzeitig erfolgt. Dieser statische Anteil stellt einen festen, d.h. unveränderlichen Anteil des Druckbildes für den zweiten Druckauftrag dar und kann sich z.B. wie gezeigt in einem oberen Abschnitt des Druckbilds befinden.

Nach Abschluss der Berechnung der Druckdaten des zweiten statischen Anteils B werden die zugehörigen Druckdaten über eine Schnittstelle vom Rechner 6 an den zweiten (Wechsel-) Pufferspeicher 8 gesendet. Dieser Pufferspeicher steht über eine Schnittstelle mit der Zusammenführungseinheit 9 in Verbindung, so dass der zweite statische Anteil B der Zusammenführungseinheit zur Verfügung steht.

Sobald die ersten Druckdaten A+al der Reihe der ersten Druckdaten A+a₁, ..., A+aᵢ, ..., A+aₙ der Druckeinheit zur Verfügung stehen, beginnt diese mit dem Drucken der ersten Druckbilder unter Verwendung der jeweiligen ersten Druckdaten.

Die Geschwindigkeit mit der dieses Drucken erfolgt wird durch die Regelung 5 bestimmt, die über jeweilige Schnittstellen mit dem Rechner 6 und dem Zähler 10 - sowie optional auch mit den beiden Pufferspeichern 7 und 8 und der Zusammenführungseinheit 9 - in Verbindung steht.

Über die Schnittstelle zum Rechner 6 erlangt die Regelung - bevorzugt laufend aktualisierte - Informationen darüber, wie weit die Berechnung der Druckdaten des zweiten statischen Anteils B fortgeschritten ist, bzw. wie lange es bis zum Abschluss dieser Berechnung noch dauern wird. Die bis zum Abschluss dieser Berechnung benötigte Zeit sei mit T_{B} bezeichnet. T_{B} ist dabei abhängig von der Rechenleistung des Rechners.

Über die Schnittstelle zum Zähler 10 und die Schnittstelle zum Rechner 6 erlangt die Regelung insgesamt - bevorzugt laufend aktualisierte - Informationen darüber, wie weit das Berechnen der ersten variablen Anteile aᵢ fortgeschritten ist, bzw. wie lange es bis zum Abschluss dieser Berechnung, d.h. bis zum Abschluss der Berechnung der Druckdaten von aₙ, noch dauern wird. Die bis zum Abschluss dieser Berechnung benötigte Zeit sei mit Tₐ bezeichnet. Tₐ ist dabei abhängig von der Rechengeschwindigkeit des Rechners und der Druckgeschwindigkeit der Druckeinheit 1: druckt die Druckeinheit aktuell sehr langsam, so wird Tₐ maßgeblich von der Druckgeschwindigkeit bestimmt, während bei aktuell sehr schnellem Drucken Tₐ maßgeblich von der Rechengeschwindigkeit des Rechners bestimmt ist.

Das Regeln der Druckgeschwindigkeit der Druckeinheit 1 erfolgt nun derart, dass die Berechnung der Druckdaten des zweiten statischen Anteils B abgeschlossen ist, bevor der Zähler 10 den Wert n erreicht, d.h. die Druckgeschwindigkeit wird solange reduziert (und dadurch Tₐ solange erhöht) bis T_{B} kleiner als Tₐ ist. Dann ist sichergestellt, dass die Druckdaten des zweiten statischen Anteils B rechtzeitig für das Drucken des zweiten Druckauftrages zur Verfügung stehen.

Beim Regeln der Druckgeschwindigkeit der Druckeinheit 1 kann zudem die Datenübertragungsgeschwindigkeit der Schnittstellen zwischen dem Rechner 6, der beiden Pufferspeicher 7, 8, der Zusammenführungseinheit 9 und der Druckeinheit 1 berücksichtigt werden. Sofern diese Datenübertragungsgeschwindigkeit keinen nennenswerten Einfluss auf die Gesamtdauer oder eine wesentliche Teildauer des Druckprozesses hat, kann sie beim Regeln der Druckgeschwindigkeit vernachlässigt werden.

Nach Abschluss der Berechnung der Druckdaten des letzten ersten variablen Anteils aₙ erfolgt im Rechner 6 das aufeinander folgende Berechnen der Druckdaten der zweiten variablen Anteile bⱼ. Diese variablen Anteile stellen einen nicht festen, d.h. veränderlichen Anteil des Druckbildes für den zweiten Druckauftrag dar und können sich jeweils z.B. wie gezeigt in einem unteren Abschnitt des Druckbilds befinden. Jedes Druckbild des zweiten Druckauftrages weist somit einen statischen Anteil B und einen der variablen Anteile bⱼ auf.

Nach Abschluss der Berechnung der Druckdaten eines jeden zweiten variablen Anteils bⱼ werden die zugehörigen Druckdaten dieses variablen Anteils bⱼ über eine Schnittstelle vom Rechner 6 an die Zusammenführungseinheit 9 gesendet, wobei der Zähler 10 den aktuellen Wert von j mitzählt (sofern anschließend ein weiterer, dritter Druckauftrag produziert werden soll). In der Zusammenführungseinheit erfolgt dann ein jeweiliges Zusammenführen der Druckdaten des zweiten variablen Anteils bⱼ mit den Druckdaten des zweiten statischen Anteils A zu ersten Druckdaten B+bⱼ. Insgesamt entsteht auf diese Weise die Reihe der zweiten Druckdaten B+b₁, ..., B+bⱼ, ..., B+bₘ. Die einzelnen ersten Druckdaten B+bⱼ werden jeweils über eine Schnittstelle an die Druckeinheit 1 weitergeleitet. Erst wenn erste Druckdaten B+bⱼ an die Druckeinheit weitergeleitet sind, werden die darauf folgenden Druckdaten B+bⱼ₊₁ zusammengeführt. Das Zusammenführen erfolgt somit in Abhängigkeit der Druckgeschwindigkeit.

Abschließend (sofern anschließend noch ein weiterer, dritter Druckauftrag produziert werden soll) erfolgt das Drucken der zweiten Druckbilder unter Verwendung der jeweiligen zweiten Druckdaten mit der Druckeinheit 1.

Beim Regeln der Druckgeschwindigkeit der Druckeinheit 1 kann zudem die TransportGeschwindigkeit des Bedruckstoffs 2, die Frequenz des Tröpfchenausstoßes des Tintenstrahl-Druckkopfes 1 und optional die Heiz-Leistung eines dem Tintenstrahl-Druckkopf nachgeordneten Trockners 12, insbesondere eines UV-Trockners, verändert werden.

### Bezugszeichenliste

- 1: Druckeinheit
- 2: Bedruckstoff
- 3: Transport-Zylinder
- 4: Antrieb
- 5: Regelung
- 6: Rechner (Workstation)
- 7: erster Pufferspeicher (Pagebuffer)
- 8: zweiter Pufferspeicher (Pagebuffer)
- 9: Zusammenführungseinheit (Merger)
- 10: Zähler
- 11a, b, c, d: Druckdaten
- 12: Trockner

## Patentansprüche

1. Verfahren zum Regeln der Druckgeschwindigkeit beim Drucken von wenigstens zwei aufeinander folgenden Druckaufträgen mit jeweils wenigstens zwei voneinander verschiedenen Druckbildern auf Bedruckstoff (2), wobei ein erster Druckauftrag n erste Druckbilder mit jeweils einem ersten statischen Anteil (A; 11a) und jeweils einem ersten variablen Anteil (aᵢ mit i=1 bis n, wobei n Element der positiven ganzen Zahlen; 11b) umfasst, und ein zweiter Druckauftrag m zweite Druckbilder mit jeweils einem zweiten statischen Anteil (B; 11c) und jeweils einem zweiten variablen Anteil (bⱼ mit j=1 bis m, wobei m Element der positiven ganzen Zahlen; 11d) umfasst,
mit folgenden Verfahrensschritten:
1) Berechnen der Druckdaten des ersten statischen Anteils (A; 11a);
2) Aufeinander folgendes Berechnen der Druckdaten der ersten variablen Anteile (aᵢ; 11b), jeweiliges Zusammenführen mit den Druckdaten des ersten statischen Anteils (A; 11a) zu ersten Druckdaten (A+aᵢ; 11a, 11b) und jeweiliges Weiterleiten der ersten Druckdaten an eine Druckeinheit (1), wobei ein Zähler (10) den aktuellen Wert von i mitzählt;
3) Paralleles Berechnen der Druckdaten des zweiten statischen Anteils (B; 11c) während des Verfahrensschritts 2);
4) Drucken der ersten Druckbilder unter Verwendung der jeweiligen ersten Druckdaten mit der Druckeinheit (1) und dabei Regeln der Druckgeschwindigkeit der Druckeinheit derart, dass die Berechnung des Verfahrensschritts 3) abgeschlossen ist, bevor der Zähler (10) den Wert n erreicht;
5) Aufeinander folgendes Berechnen der Druckdaten der zweiten variablen Anteile (bⱼ; 11d), jeweiliges Zusammenführen mit den Druckdaten des zweiten statischen Anteils (B; 11c) zu zweiten Druckdaten (B+bⱼ; 11c, 11d) und jeweiliges Weiterleiten der zweiten Druckdaten an die Druckeinheit (1); und
6) Drucken der zweiten Druckbilder unter Verwendung der jeweiligen zweiten Druckdaten mit der Druckeinheit (1).

2. Verfahren nach Anspruch 1,
**dadurch gekennzeichnet,**
**dass** das Berechnen gemäß der Verfahrensschritte 1), 2), 3) und 5) durch denselben Rechner (6) erfolgt.

3. Verfahren nach Anspruch 1,
**dadurch gekennzeichnet,**
**dass** die gemäß Verfahrensschritt 1) berechneten Druckdaten in einem ersten Pufferspeicher (7) gespeichert werden und dass die gemäß Verfahrensschritt 3) berechneten Druckdaten in einem zweiten Pufferspeicher (8) gespeichert werden.

4. Verfahren nach Anspruch 1,
**dadurch gekennzeichnet,**
**dass** das Zusammenführen der Druckdaten gemäß Verfahrensschritt 2) oder 5) in einer Zusammenführungseinheit (9) erfolgt, der die zusammenzuführenden Druckdaten von dem jeweiligen ersten oder zweiten Pufferspeicher (7, 8) und dem Rechner (6) zugeführt werden.

5. Verfahren nach Anspruch 1,
**dadurch gekennzeichnet,**
**dass** beim Regeln der Druckgeschwindigkeit der Druckeinheit (1) die Rechengeschwindigkeit des Rechners (6) beim parallelen Berechnen der Druckdaten der ersten variablen Anteile (aᵢ; 11b) und der Druckdaten des zweiten statischen Anteils (B; 11c) berücksichtigt wird.

6. Verfahren nach Anspruch 1,
**dadurch gekennzeichnet,**
**dass** beim Regeln der Druckgeschwindigkeit der Druckeinheit (1) die Datenübertragungsgeschwindigkeit der Schnittstellen zwischen dem Rechner (6), der beiden Pufferspeicher (7, 8), der Zusammenführungseinheit (9) und der Druckeinheit (1) berücksichtigt wird.

7. Verfahren nach Anspruch 1,
**dadurch gekennzeichnet,**
**dass** das Drucken mittels wenigstens eines Tintenstrahl-Druckkopfes (1) erfolgt.

8. Verfahren nach Anspruch 7,
**dadurch gekennzeichnet,**
**dass** beim Regeln der Druckgeschwindigkeit der Druckeinheit (1) die TransportGeschwindigkeit des Bedruckstoffs (2), die Frequenz des Tröpfchenausstoßes des Tintenstrahl-Druckkopfes (1) und optional die Strahlungs-Leistung eines dem Tintenstrahl-Druckkopf nachgeordneten Trockners (12), insbesondere eines UV-Trockners, verändert wird.

## Claims

1. Method for controlling the printing speed when at least two successive print jobs, each one with at least two prints differing from one another, are printed onto printing material (2), a first print job comprising n first prints with a respective first static proportion (A; 11a) and a respective first variable proportion (aᵢ with i=1 to n, wherein n is an element of the positive integer numbers; 11b), and a second print job comprising m second prints, each one with a respective second static proportion (B, 11c) and a respective second variable proportion (bj with j=1 to m, wherein m is an element of the positive integers; 11d),
comprising the following steps of
1) computing the print data of the first static proportion (A; 11a);
2) successively computing the print data of the first variable proportions (aᵢ; 11b) and respectively combining them with the print data of the first static proportion (A; 11a) to create first print data (A+aᵢ; 11a, 11b) and forwarding the first print data to a printing unit (1) while a counter 810) counts the current value of i,
3) during step 2), calculating the print data of the second static proportion (B; 11c) in parallel;
4) printing the first prints on the printing unit (1) using the respective first print data while controlling the printing speed of the printing unit in such a way that the computing of step 3) is completed before the counter (10) reaches the value n;
5) successively calculating the print data of the second variable proportions (bⱼ; 11d), respectively combining them with the print data of the second static proportion (B; 11c) to create second print data (B+bⱼ; 11c, 11d) and forwarding the second print data to the printing unit (1); and
6) printing the second prints on the printing unit (1) using the respective second print data.

2. Method according claim 1,
**characterized**
**in that** the computation in accordance with steps 1), 2), 3) and 5) are made by the same computer (6).

3. Method according to claim 1,
**characterized**
**in that** the print data computed in accordance with step 1) are buffered in a first buffer (7) and the print data computed in accordance with step 3) are buffered in a second buffer (8).

4. Method according to claim 1,
**characterized**
**in that** the combination of the print data in accordance with step 2) or step 5) is achieved in a combination unit (9) that is supplied with the print data to be combined by the respective first or second buffer (7, 8) and the computer (6).

5. Method according to claim 1,
**characterized**
**in that** when controlling the printing speed of the printing unit (1), the computing speed of the computer (6) for the parallel computation of the print data of the first variable proportions (a₁; 11b) and of the print data of the second static proportion (B; 11c) is taken into consideration.

6. Method according to claim 1,
**characterized**
**in that** when controlling the printing speed of the printing unit (1), the data transmission speed of the interfaces between the computer (6), the two buffers (7, 8), the combination unit (9) and the printing unit (1) are taken into consideration.

7. Method according to claim 1,
**characterized**
**in that** the printing operation is carried out by at least one inkjet printing head (1).

8. Method according to claim 7,
**characterized**
**in that** when controlling the printing speed of the printing unit (1), the transport speed of the printing material (2), the frequency of the droplet emission of the inkjet printing head (1) and optionally the radiation power of a dryer (12), in particular a UV dryer, provided downstream of the inkjet print head is modified.

## Revendications

1. Procédé de régulation de la vitesse d'impression lors de l'impression d'au moins deux commandes d'impression consécutives avec chacune au moins deux images d'impression différentes sur un support d'impression (2), pour lequel une première commande d'impression comporte n premières images d'impression avec respectivement une première part statique (A; 11a) et respectivement une première part variable (aᵢ avec i=l à n, n représentant l'élément des nombres entiers positifs; 11b) et une deuxième commande d'impression comporte m deuxièmes images d'impression avec respectivement une deuxième part statique (B; 11c) et respectivement une deuxième part variable (bⱼ avec j=1 à m, m représentant l'élément des nombres entiers positifs ; 11d),
avec les étapes de procédé suivantes :
1) calcul des données d'impression de la première part statique (A; 11a);
2) calcul consécutif des données d'impression des premières parts variables (aᵢ; 11b), regroupement respectif avec les données d'impression de la première part statique (A; 11a) relatives aux premières données d'impression (A+aⱼ; 11a, 11b) et transmission respective des premières données d'impression à une unité d'impression (1), un compteur (10) comptant la valeur actuelle depuis i ;
3) calcul parallèle des données d'impression de la deuxième part statique (B; 11c) durant l'étape de procédé 2);
4) impression des premières images d'impression en utilisant les premières données d'impression respectives avec l'unité d'impression (1) et ce faisant régulation de la vitesse d'impression de l'unité d'impression de sorte que le calcul de l'étape de procédé 3) soit achevé avant que le compteur (10) n'atteigne la valeur n ;
5) calcul consécutif des données d'impression des deuxièmes parts variables (bⱼ; 11d), regroupement respectif avec les données d'impression de la deuxième part statique (B; 11c) en deuxièmes données d'impression (B+bⱼ; 11c, 11d) et transmission respective des deuxièmes données d'impression à l'unité d'impression (1) ; et
6) impression des deuxièmes images d'impression en utilisant les deuxièmes données d'impression respectives avec l'unité d'impression (1).

2. Procédé selon la revendication 1,
**caractérisé en ce**
**que** le calcul conforme aux étapes de procédé 1), 2), 3) et 5) est assuré par le même ordinateur (6).

3. Procédé selon la revendication 1,
**caractérisé en ce**
**que** les données d'impression calculées conformément à l'étape de procédé 1) sont mémorisées dans une première mémoire tampon (7) et que les données d'impression calculées conformément à l'étape de procédé 3) sont mémorisées dans une deuxième mémoire tampon (8).

4. Procédé selon la revendication 1,
**caractérisé en ce**
**que** le regroupement des données d'impression conformément à l'étape de procédé 2) ou 5) s'effectue dans une unité de regroupement (9), à laquelle sont acheminées les données d'impression à regrouper de la première ou de la deuxième mémoire tampon (7, 8) respective et de l'ordinateur (6).

5. Procédé selon la revendication 1,
**caractérisé en ce**
**que**, lors de la régulation de la vitesse d'impression de l'unité d'impression (1), la vitesse de calcul de l'ordinateur (6) lors du calcul parallèle des données d'impression des premières parts variables (aj; 1 lb) et des données d'impression de la deuxième part statique (B; 11c) est prise en compte.

6. Procédé selon la revendication 1,
**caractérisé en ce**
**que**, lors de la régulation de la vitesse d'impression de l'unité d'impression (1), la vitesse de transmission des données des interfaces entre l'ordinateur (6), des deux mémoires tampon (7, 8), de l'unité de regroupement (9) et de l'unité d'impression (1) est prise en compte.

7. Procédé selon la revendication 1,
**caractérisé en ce**
**que** l'impression a lieu au moyen d'au moins une tête d'impression à jet d'encre (1).

8. Procédé selon la revendication 7,
**caractérisé en ce**
**que**, lors de la régulation de la vitesse de l'unité d'impression (1), la vitesse de transport du support d'impression (2), la fréquence d'éjection des gouttelettes de la tête d'injection à jet d'encre (1) et en option la puissance de rayonnement d'un sécheur (12) implanté en aval de la tête d'impression à jet d'encre, notamment d'un sécheur UV, sont modifiées.
